# EUROPÄISCHE PATENTSCHRIFT

(11) **EP 0 962 672 B1**
(45) Veröffentlichungstag und Bekanntmachung des Hinweises auf die Patenterteilung: **02.06.2004**
(21) Anmeldenummer: 99108114.2
(22) Anmeldetag: 24.04.1999
(51) Int. Cl.: F16C 17/10

(54) **Gebaute Bundlagerschale**
Axial/radial composite bearing
Palier composé axial-radial

(30) Priorität: 05.06.1998 DE 19825118
(43) Veröffentlichungstag der Anmeldung: 08.12.1999
(73) Patentinhaber: KS Gleitlager GmbH, 68789 St. Leon-Rot (DE)
(72) Erfinder: Bickle, Wolfgang, 68799 Reilingen (DE); Schubert, Werner, 69168 Wiesloch (DE)
(74) Vertreter: Dreiss, Fuhlendorf, Steimle & Becker

(56) Entgegenhaltungen:
- WO-A-93/17250
- DE-C- 3 933 667
- GB-A- 2 225 392

## Beschreibung

Die Erfindung betrifft eine gebaute Bundlagerschale mit einem halbschalenförmigen Radiallagerteil und einem im Bereich der axialen Stirnseite des Radiallagerteils einseitig befestigbaren teilringscheibenförmigen Axiallagerteil oder mit beidseits befestigbaren teilringscheibenförmigen Axiallagerteilen, wobei jedes Axiallagerteil in radialer Richtung nach innen vorspringende Haltezungen aufweist, die mit Halteausnehmungen im Bereich der axialen Stirnseite des Radiallagerteils in Eingriff bringbar sind, wobei wenigstens eine der Halteausnehmungen in axialer Richtung randoffen ausgebildet ist.

Eine derartige gebaute Bundlagerschale ist aus der DE 40 15 256 A1 bekannt. Bei einem in dieser Druckschrift beschriebenen Ausführungsbeispiel werden die Haltezungen des Axiallagerteils in die Halteausnehmungen des Radiallagerteils eingeführt, und danach werden in die axiale Stirnseite des Radiallagerteils beidseits der Halteausnehmung Kerben eingebracht. Durch diese axiale Krafteinwirkung auf das Radiallagerteil wird eine verdrängende Verformung in Umfangsrichtung derart erreicht, dass die betreffende Haltezunge quasi umbördelt wird und in axialer Richtung nicht mehr aus der Halteausnehmung gelöst werden kann. Diese Art der Fixierung ist jedoch extrem aufwendig. Die verdrängende Verformung erfordert zur Ausübung und Aufnahme der hierfür benötigten Kräfte einen komplizierten Werkzeugaufbau. Die verdrängende Verformung kann nicht auf den Bereich der Halteausnehmungen und auf die Umfangsrichtung begrenzt werden, sondern er geht stets mit einer ungewollten Verformung des Radiallagerteils einher und hat sich in der Praxis nicht bewährt.

Mit dieser Druckschrift wurde auch vorgeschlagen, axiale Sicherungsnasen aus der Umfangsfläche des Radiallagerteils heraus und gegen das Axiallagerteil zu stemmen. Auch dabei muss eine ungewollte Verformung des Radiallagerteils hingenommen werden.

Eine entsprechende Ausbildung einer gebauten Bundlagerschale ist aus DE 24 12 870 B2 bekannt.

Aus der DE 39 41 343 A1 ist ein besonders aufwendiges gebautes Bundlager bekannt, bei dem axial vorstehende Randabschnitte des Radiallagerteils um mehr als 90° nach außen gebogen werden, um mit jeweiligen Lippen der Haltezungen des Axiallagerteils eine Hintergriffverbindung zu bilden. Der hierfür erforderliche Materialbedarf zur Herstellung der axial vorstehenden Halteabschnitte und der Bearbeitungsaufwand ist sehr groß. Es besteht außerdem die Gefahr, dass die Halteabschnitte beim Umbiegen nach außen um mehr als 90° abbrechen.

Eine gebaute Bundlagerschale nach dem Oberbegriff des Anspruchs 1 ist aus der DE-C-3 933 667 bekannt.

Der vorliegenden Erfindung liegt die Aufgabe zugrunde, eine gebaute Bundlagerschale der eingangs beschriebenen Art so zu verbessern, dass beim Fügen von Radiallagerteil und Axiallagerteil eine ungewollte Verformung des Radiallagerteils verhindert und die Maßhaltigkeit der beiden Teile nicht beeinträchtigt wird. Die Montage der Bundlagerschale, d.h. das Zusammenfügen und unlösbare Verbinden von Radiallagerteil und Axiallagerteil soll auf kostengünstige Art und Weise durchführbar sein.

Diese Aufgabe wird durch die Merkmale des Anspruchs 1 gelöst.

Es soll also nach der Erfindung keine verdrängende Verformung, durch Kerbwirkung oder dergleichen, des Radiallagerteils vorgenommen werden, sondern es soll ein die Halteausnehmung unmittelbar begrenzender Steg lediglich gegen die jeweilige Haltezunge umgebogen werden, um zu verhindern, dass die Haltezunge sich aus ihrer axialen Hintergriffsstellung in Umfangsrichtung zurückdrehen und dadurch lösen kann. Durch entsprechende Dimensionierung des Stegs, insbesondere auch durch Vorsehen von Sollbiegestellen, können die zum Umbiegen des Stegs erforderlichen Kräfte "eingestellt" werden, so dass hierdurch keine darüberhinaus gehende ungewollte Verformung des Radiallagerteils zu befürchten ist.

Zur Verwirklichung der Verdrehbarkeit des Axiallagerteils bzw. der Haltezungen in die Hintergriffsstellung sind grundsätzlich zwei bevorzugte Ausführungsformen, die in den Patentansprüchen 2 und 3 beschrieben sind, denkbar. Nach der ersten Ausführungsform ist eine Halteausnehmung in Umfangsrichtung des Radiallagerteils geringfügig größer, d.h. länger bemessen, als die zugeordnete Haltezunge. Das Axiallagerteil kann daher mit seiner Haltezunge in die Halteausnehmung eingebracht und dann in die Hintergriffsstellung verdreht werden.

Es ist aber auch nach der zweiten Ausführungsform denkbar, dass die Umfangslänge einer betreffenden Halteausnehmung im wesentlichen derjenigen der zugeordneten Haltezunge entspricht. Solchenfalls weist die zugeordnete Haltezunge eine in Umfangsrichtung erstreckte randoffene Aussparung auf, mit der sie das Radiallagerteil maulförmig umgreift, wenn das Axiallagerteil in die Hintergriffstellung verdreht ist.

Es wird ausdrücklich darauf hingewiesen, dass auch eine Mischform der ersten und zweiten Ausführungsform denkbar wäre, indem beispielsweise die im Scheitel vorgesehene Haltezunge nach der ersten Ausführungsform und die beiden beidseits des Scheitels vorgesehenen Haltezungen mit der randoffenen Aussparung ausgebildet sind.

Es erweist sich desweiteren als vorteilhaft, wenn die Halteausnehmungen eine lichte offene Umfangslänge aufweisen, die zumindest so lang wie die Umfangslänge der zugeordneten Haltezunge ist. Dies eröffnet die Möglichkeit, das Axiallagerteil mit seinen Haltezungen in einer einzigen Verschiebebewegung in axialer Richtung mit seinen Haltezungen in den Halteausnehmungen des Radiallagerteils zu positionieren. Es braucht dann lediglich noch in die Hintergriffsstellung verdreht zu werden. Alternativ hierzu wäre es denkbar, dass das Axiallagerteil in radialer Ebene mit seiner im Scheitel angeordneten Haltezunge in die Halteausnehmung eingeschoben wird, wobei solchenfalls die übrigen beidseits des Scheitels angeordneten Haltezungen in die betreffenden Halteausnehmungen verkippt werden. Auch im Anschluss hieran wird das Axiallagerteil in die Hintergriffsstellung verdreht. Wenn die Haltezungen in der vorstehend erwähnten Richtung des radialen Fügens des Axiallagerteils an das Radiallagerteil hinterschnittfrei ausgebildet wären, d.h. nicht in radialer Richtung sondern zueinander in Verschieberichtung ausgerichtet wären, so ließe sich auch ein verkippungsfreier Fügevorgang durch Verschieben des Axiallagerteils in radialer Ebene des Radiallagerteils verwirklichen. Um zu verhindern, dass sich das Axiallagerteil wieder in radialer Richtung aus seiner Montageposition löst, könnten die Haltezungen die vorstehend erwähnte (Anspruch 3) maulförmige, randoffene Aussparung aufweisen, mit der sie nach dem radialen Fügen und Verdrehen das Radiallagerteil umgreifen.

Der in Umfangsrichtung umbiegbare Steg ist in vorteilhafter Weise einerseits durch Stanzen der Halteausnehmung und andererseits durch Stanzen einer axialen zungenförmigen Ausnehmung in den axialen stirnseitigen Bereich des Radiallagerteils gebildet. Er kann an seinem freien Ende eine hakenförmige Krümmung aufweisen.

Einzelheiten und Vorteile der Erfindung ergeben sich aus der zeichnerischen Darstellung und nachfolgenden Beschreibung bevorzugter Ausführungsformen der erfindungsgemäßen gebauten Bundlagerschale. In der Zeichnung zeigt:
- Figur 1: eine Stirnansicht einer ersten Ausführungsform einer erfindungsgemäßen Bundlagerschale;
- Figur 2: eine Draufsicht auf die Bundlagerschale nach Figur 1;
- Figur 3: eine Schnittansicht der Bundlagerschale nach Figur 1 gesehen in Richtung der Pfeile III-III in Figur 1;
- Figuren 4a, 4b: ein Detail "X" aus Figur 2;
- Figur 5: ein Detail "Y" aus Figur 1;
- Figur 6: ein Detail "Z" aus Figur 3;
- Figur 7: ein Detail "W" aus Figur 1; und
- Figur 8: ein der Figur 7 entsprechendes Detail einer weiteren Ausführungsform einer erfindungsgemäßen Bundlagerschale.

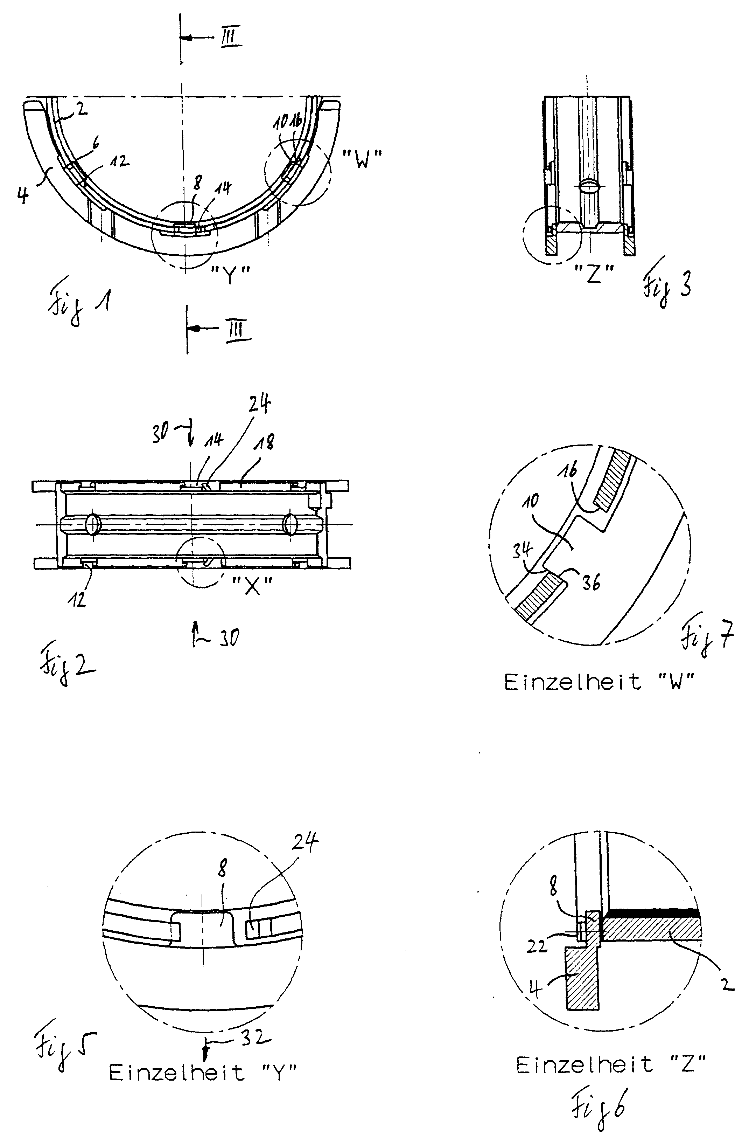

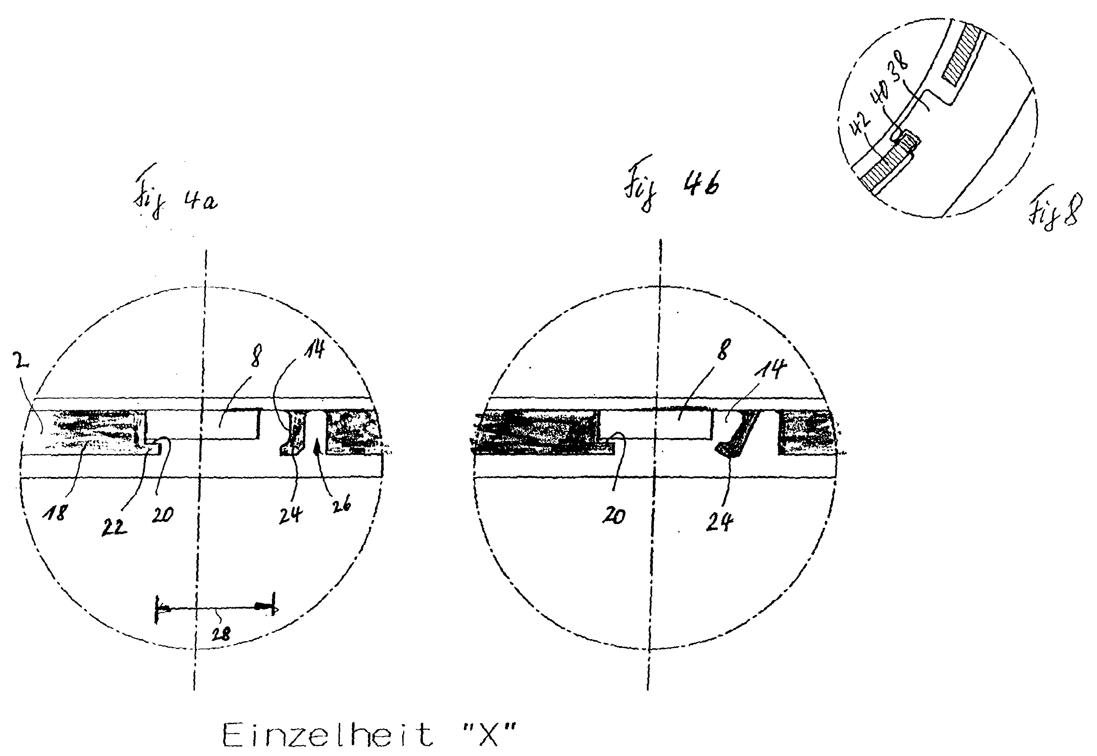

Die Figuren 1 bis 3 zeigen verschiedene Ansichten einer ersten Ausführungsform einer gebauten Bundlagerschale bestehend aus Radiallagerteil 2 und Axiallagerteil 4. Die Figuren 4 bis 7 zeigen Details der Figuren 1 bis 3. Am Axiallagerteil 4 sind radial nach innen vorstehende Haltezungen 6, 8, 10 vorgesehen, die durch Stanzen und Prägen in an sich bekannter Weise gebildet sind. Die Haltezungen 6, 8, 10 greifen in Halteausnehmungen 12, 14, 16 im stirnseitigen Bereich 18 des Radiallagerteils 2 ein.

Die Halteausnehmungen 12, 14, 16 sind in axialer Richtung randoffen ausgebildet. Die Länge der Halteausnehmungen 12, 14, 16 in Umfangsrichtung des Radiallagerteils 2 ist etwas größer als die entsprechende Länge der Haltezungen 6, 8, 10. Die Figuren 4a, 4b zeigen die Ausbildung der im Scheitel vorgesehenen Halteausnehmung 14. Sie ist einerseits von einem einen axialen Hintergriff 20 bildenden Vorsprung 22 des stirnseitigen Bereichs 18 des Radiallagerteils 2 und andererseits von einem im wesentlichen in axialer Richtung erstreckten Steg 24 begrenzt. Der Steg 24 ist durch Ausstanzen der die Halteausnehmung 14 begrenzenden Öffnung einerseits sowie durch Ausstanzen einer zungenförmigen randoffenen Ausnehmung 26 in den stirnseitigen Bereich 20 des Radiallagerteils 2 gebildet. Wie in den Figuren 4a und 4b dargestellt, ist die lichte offene Umfangslänge 28 der Halteausnehmung 14 wenigstens so groß wie diejenige der Haltezunge 8, so dass das Axiallagerteil 4 in axialer Richtung, also in Richtung der Pfeile 30 in Figur 2, an das Radiallagerteil 2 gefügt und dann in die in den Figuren 4a, 4b gezeigte Hintergriffsstellung mit dem Vorsprung 22 verdreht werden. Wie in Figur 4b dargestellt, wird anschließend der Steg 24 in Richtung auf die Haltezunge 8 umgebogen, so dass diese unter keinen Umständen aus der Halteausnehmung 14 bzw. aus der Hintergriffsstellung mit dem Vorsprung 22 freikommen kann.

Die beidseits des Scheitels vorgesehenen Halteausnehmungen 12, 16 sind entsprechend der Halteausnehmung 14 ausgebildet, sie weisen jedoch keinen umbiegbaren Steg auf. Mit dem Einsetzen und Verdrehen des Axiallagerteils 4 in die Hintergriffsstellung ergibt sich auch eine Sicherung gegen ein Lösen des Axiallagerteils in radialer Ebene. Beispielsweise kann der Axiallagerteil 4 nicht in durch den Scheitelpunkt gehender Richtung 32 (Figur 5) gelöst werden, da eine Flanke 34 der Haltezunge 10 in dieser Richtung 32 einen Hintergriff mit einer die zugeordnete Halteausnehmung 16 begrenzenden Wandung 36 des stirnseitigen Bereichs 18 des Radiallagerteils 2 bildet, wie in Figur 7 dargestellt ist.

Figur 8 zeigt eine der Figur 7 entsprechende Darstellung einer Ausführungsform der erfindungsgemäßen Bundlagerschale, wonach eine Haltezunge 38 eine in Umfangsrichtung erstreckte randoffene Aussparung 40 aufweist, mit der sie einen Randbereich 42, welcher die zugeordnete Halteausnehmung begrenzt, maulförmig übergreift und so in eine Hintergriffsstellung drehbar ist.

## Patentansprüche

1. Gebaute Bundlagerschale mit einem halbschalenförmigen Radiallagerteil (2) und einem im Bereich (18) der axialen Stirnseite des Radiallagerteils einseitig befestigbaren teilringscheibenförmigen Axiallagerteil (4) oder mit beidseits befestigbaren teilringscheibenförmigen Axiallagerteilen (4), wobei jedes Axiallagerteil in radialer Richtung nach innen vorspringende Haltezungen (6, 8, 10) aufweist, die mit Halteausnehmungen (12, 14, 16) im Bereich der axialen Stirnseite des Radiallagerteils in Eingriff bringbar sind, wobei wenigstens eine der Halteausnehmungen (12, 14, 16) in axialer Richtung randoffen ausgebildet ist, wobei die in axialer Richtung randoffene Halteausnehmung (12, 14, 16) von einem axialen Hinterschnitt (20) begrenzt ist, der von der Haltezunge (6, 8, 10) hintergreifbar ist, und wobei der Axiallagerteil (4) mit seinen Haltezungen (6, 8, 10) in die Halteausnehmung (12, 14, 16) eingeführt und in Umfangsrichtung des Radiallagerteils (2) in eine Hintergriffsstellung drehbar ist, **dadurch gekennzeichnet, dass** am Radiallagerteil ein eine Halteausnehmung (14) begrenzender Steg (24) vorgesehen ist, der nach dem Aneinanderfügen von Radiallagerteil (2) und Axiallagerteil (4) in Umfangsrichtung gegen die dieser Halteausnehmung (14) zugeordnete Haltezunge (8) umbiegbar ist, so dass sie nicht mehr aus der Hintergriffsstellung freikommt.

2. Gebaute Bundlagerschale nach Anspruch 1, **dadurch gekennzeichnet, dass** eine Halteausnehmung (12, 14, 16) in Umfangsrichtung des Radiallagerteils geringfügig größer bemessen ist als die zugeordnete Haltezunge (6, 8, 10).

3. Gebaute Bundlagerschale nach Anspruch 1, **dadurch gekennzeichnet, dass** eine Haltezunge (38) eine in Umfangsrichtung erstreckte randoffene Aussparung (40) aufweist, mit der sie das Radiallagerteil umgreift, wenn das Axiallagerteil in die Hintergriffsstellung verdreht ist.

4. Gebaute Bundlagerschale nach einem der vorstehenden Ansprüche, **dadurch gekennzeichnet, dass** die Halteausnehmungen (12, 14, 16) eine lichte offene Umfangslänge (28) aufweisen, die zumindest so lang wie diejenige der zugeordneten Haltezunge (6, 8, 10) ist.

5. Gebaute Bundlagerschale nach einem der vorstehenden Ansprüche, **dadurch gekennzeichnet, dass** der Steg (24) einerseits durch Stanzen der Halteausnehmung (14) und andererseits durch Stanzen einer axialen zungenförmigen Ausnehmung (26) in den axialen stirnseitigen Bereich (18) des Radiallagerteils gebildet ist.

## Claims

1. Bearing bush assembly with a half-shell radial-bearing element (2) and a semi-circular thrust-bearing element (4), which can be fastened on one side in the region (18) of the axial end face of the radial-bearing element or with semi-circular thrust-bearing elements (4), which can be fastened on both sides, wherein each thrust-bearing element in the radial direction has inwardly protruding mounting lugs (6, 8, 10), which can be engaged with mounting slots (12, 14, 16) in the region of the axial end face of the radial-bearing element, wherein at least one of the mounting slots (12, 14, 16) is formed open-ended in the axial direction, wherein said mounting slot (12, 14, 16), open-ended in the axial direction, is bordered by an axial undercut (20), which can be gripped from the rear by the mounting lug (6, 8, 10), and wherein the thrust-bearing element (4) with its mounting lugs (6, 8, 10) is inserted into the mounting slot (12, 14, 16) and can be rotated in the peripheral direction of the radial-bearing element (2) into a rear grip position, **characterized in that** a slat (24) bordering the mounting slot (14) is provided on the radial-bearing element, which after the radial-bearing element (2) and thrust-bearing element (4) have been joined together, can be bent in the peripheral direction towards the mounting lug (8) associated with this mounting slot (14), so that it no longer becomes detached from the rear grip position.

2. Bearing bush assembly according to claim 1, **characterized in that** a mounting slot (12, 14, 16) in the peripheral direction of the radial-bearing element is dimensioned slightly larger than the associated mounting lug (6, 8, 10).

3. Bearing bush assembly according to claim 1, **characterized in that** a mounting lug (38) has an open-ended recess (40) extending in the peripheral direction, with which it embraces the radial-bearing element, if the thrust-bearing element is rotated into the rear grip position.

4. Bearing bush assembly according to any one of the above claims, **characterized in that** the mounting slots (12, 14, 16) have a clear open peripheral length (28), which is at least as long as that of the associated mounting lug (6, 8, 10).

5. Bearing bush assembly according to any one of the above claims, **characterized in that** the slat (24) on the one hand is formed by stamping out the mounting slot (14) and on the other hand by stamping out an axial lug-shaped slot (25) in the region of the axial end face (18) of the radial-bearing element.

## Revendications

1. Palier composé axial-radial avec un élément de palier radial (2) en forme de demi-coquille et un élément de palier axial (4) en forme de secteur de rondelle, apte à être fixé d'un côté dans la région (18) de la face frontale axiale de l'élément de palier radial, ou avec des éléments de palier axiaux (4) en forme de secteurs de rondelle, aptes à être fixés des deux côtés, chaque élément de palier axial présentant des languettes de retenue (6, 8, 10) qui dépassent vers l'intérieur dans la direction radiale et peuvent être mises en prise avec des évidements de retenue (12, 14, 16) ménagés au niveau de la face frontale axiale de l'élément de palier radial, au moins un des évidements de retenue (12, 14, 16) étant ouvert sur un bord dans la direction axiale, l'évidement (12, 14, 16) ouvert sur un bord dans la direction axiale étant délimité par une contre-dépouille axiale (20) derrière laquelle peut venir s'engager la languette de retenue (6, 8, 10) et l'élément de palier axial (4) étant engagé par ses languettes de retenue (6, 8, 10) dans l'évidement de retenue (12, 14, 16) et pouvant être entraîné en rotation dans la direction circonférentielle de l'élément de palier radial (2) jusqu'à une position de blocage, **caractérisé en ce qu'**il est prévu sur l'élément de palier radial une barrette (24) qui délimite un évidement de retenue (14) et qui peut être cintrée dans la direction circonférentielle contre la languette de retenue (8) associée audit évidement de retenue (14) après assemblage de l'élément de palier radial (2) et de l'élément de palier axial (4), de sorte que ladite languette de retenue ne peut plus se dégager de la position de blocage.

2. Palier composé axial-radial selon la revendication 1, **caractérisé en ce qu'**un évidement de retenue (12, 14, 16) est dimensionné légèrement plus généreusement, dans la direction circonférentielle de l'élément de palier radial, que la languette de retenue (6, 8, 10) associée.

3. Palier composé axial-radial selon la revendication 1, **caractérisé en ce qu'**une languette de retenue (38) présente une encoche (40) ouverte sur un bord et s'étendant dans la direction circonférentielle, par laquelle elle enserre l'élément de palier radial lorsque l'élément de palier axial a été entraîné en rotation jusqu'en position de blocage.

4. Palier composé axial-radial selon l'une quelconque des revendications précédentes, **caractérisé en ce que** les évidements de retenue (12, 14, 16) ont une longueur circonférentielle intérieure ouverte (28) au moins égale à la longueur circonférentielle de la languette de retenue associée (6, 8, 10).

5. Palier composé axial-radial selon l'une quelconque des revendications précédentes, **caractérisé en ce que** la barrette (24) est formée d'une part par découpage de l'évidement de retenue (14) et d'autre part par découpage d'un évidement axial (26) en forme de languette dans la région frontale axiale (18) de l'élément de palier radial.
